# EUROPEAN PATENT SPECIFICATION

(11) **EP 2 928 656 B1**
(45) Date of publication and mention of the grant of the patent: **17.01.2018**
(21) Application number: 13799434.9
(22) Date of filing: 14.11.2013
(51) Int. Cl.: B29C 39/02, B29C 39/44, F16J 15/14, F01M 11/00

(54) **METHOD FOR MAKING PRESS-IN-PLACE GASKETS**
VERFAHREN ZUR HERSTELLUNG VON EINPRESSDICHTUNGEN
PROCÉDÉ DE FABRICATION DE JOINTS À PRESSION

(30) Priority: 05.12.2012 US 201213706128
(43) Date of publication of application: 14.10.2015
(73) Proprietor: Federal-Mogul Corporation, Southfield, MI 48033 (US)
(72) Inventor: LARSON, Richard, Michael, Des Plaines, IL 60016 (US); KUELTZO, Steven, Aurora, IL 60504 (US); HORTON, John, H., Chicago, IL 60613 (US); STARK, John, Robert, Hanover, IL 60133 (US); ROMAN, Fred, Niles, IL 60714 (US)
(74) Representative: Becker Kurig Straus
(86) International application number: PCT/US2013/069968
(87) International publication number: WO 2014/088773

(56) References cited:
- FR-A- 1 542 086
- US-A1- 2008 001 366
- "3D Scanner", Wikipedia , 14 November 2012 (2012-11-14), XP002719640, Retrieved from the Internet: URL:http://web.archive.org/web/20121115035 732/http://en.wikipedia.org/wiki/3D_scanne r [retrieved on 2014-02-10]

## Description

### TECHNICAL FIELD

This invention relates to gaskets, and more particularly to the manufacture of press-in-place gaskets.

### BACKGROUND

Gaskets are well known for providing seals between parts and components in vehicles and in engines of all types. For example, gaskets are commonly used today for sealing manifolds, oil pans, valve covers and the like. Many of these gaskets are made of a rubber or elastomeric material, although some are made of a fibrous or felt-type material.

The gaskets come in many styles and types depending on their function and sealing qualities. Some are made of rubber in a uniform shape for various applications, such as O-ring type seals, and some are made of certain shapes and structures specifically for one purpose, such as rocker cover gaskets. Press-in-place (PIP) gaskets are typically installed into a groove or cavity which is cast, molded or machined into the components.

Difficulties arise in trying to replicate PIP, non-rigid type gaskets. Due to the non-rigid nature of these gaskets, they cannot be accurately measured once removed from the mating component. Unless the size and shape of PIP replacement gaskets are perfect, sealing problems could result leading to leakage. Producing a commercially acceptable PIP gasket is often a "hit or miss" effort. The final parts might not fit correctly and the tooling used to make the gaskets might have to be reworked or scrapped. A method for manufacturing a PIP gasket is known from document FR 1 542 086.

A method and system for more accurately producing replacement PIP gaskets would be well received in the gasket industry.

### SUMMARY OF THE INVENTION

The present invention provides a unique method for accurately producing commercially acceptable PIP gaskets, particularly for aftermarket replacement. The method starts with obtaining the part or component in which the gasket is to be installed. These parts include one or more grooves in which the gaskets are to be positioned.

A quick-setting or curable molding material, such as a liquid plastic material, is mixed or otherwise provided. The material is poured or otherwise dispensed into the groove in the component. Preferably the groove has been prepared with a mold release material. Once cured (hardened), the formed rigid gasket replica is removed. This creates an accurate, rigid replica of the original gasket which can then be easily scanned.

Once formed and cleared of any flashing and other irregularities, the sample is scanned and measured, typically by a laser scanner. This creates an accurate image of the gasket. Part drawings are then prepared from this data and molds are made to produce copies of the gaskets for marketing.

Further objects, features and benefits of the invention are set forth below in the following description of the invention when viewed in combination with the drawings and claims.

### BRIEF DESCRIPTION OF THE DRAWINGS

FIGURE 1 is a perspective view of an engine component and a PIP sealing gasket which for installation in a groove in the component.
FIGURE 2 depicts filling a groove in an engine component with a curable liquid material.
FIGURE 3 depicts removing the molded gasket replica sample from the groove.
FIGURE 4 depicts trimming excess material from the molded gasket replica.
FIGURE 5 depicts scanning the gasket replica with a laser scanner.
FIGURE 6 depicts a drawing of the gasket replica.
FIGURE 7 is a flow chart of an embodiment of the invention.

### DESCRIPTION OF THE PREFERRED EMBODIMENTS

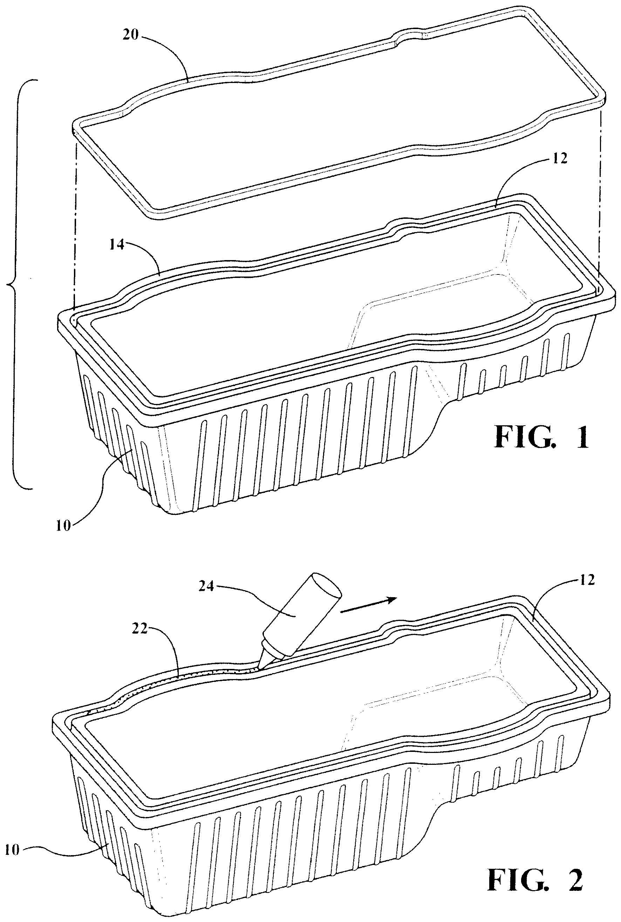

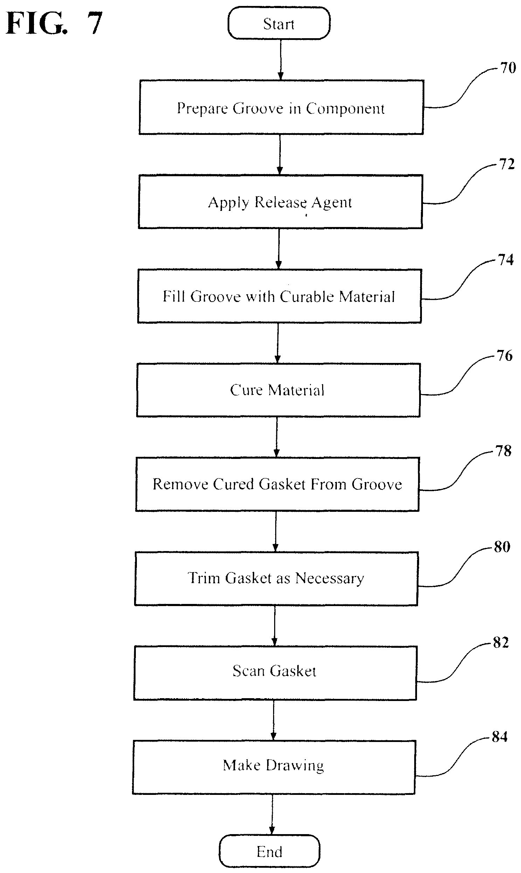

The present inventive process is schematically presented in Figures 1-6. A flow chart of a representative embodiment is shown in Figure 7. The process is used to produce press-in-place (PIP) component gaskets in a more accurate and faster manner. A rigid sample of the gasket is made by the inventive process in the size and shape of the original gasket that was included with the original component.

Problems arise if the sample replacement gasket is not laid out and produced virtually exactly as the original gasket which resided in a groove in an engine component. In this regard, PIP gaskets are utilized in various engine and vehicle components, such as oil pans and valve covers. Other products which commonly use PIP gaskets include water pumps, intake manifolds..

For purposes of the present description of the invention, the process will be described with reference to an oil pan cover. It is to be understood, however, that the inventive process is not to be limited to oil pan covers or to the specific materials or processes described herein. Instead, the following description is being made only by way of example, and the present invention can be used to produce various sizes, shapes and types of gaskets used with virtually any type of product, device or component.

PIP gaskets are designed to be compressed into a groove and provide superior sealing pressure while not overstressing the material. The gaskets are typically used in metal-to-metal joints and are also known as "non-rigid" PIP gaskets. PIP gaskets are self-retaining and do not require adhesives to stay in place. They are also easy to install and typically resistant to normal oils, cooling liquids, salt water, dust, dirt and intake air. PIP gaskets also typically can be used in environments which have a wide range of temperatures, such as - 60°C to 220°C.

The materials used for PIP gaskets include most rubber and elastomeric materials. These include silicone rubber, nitrite, polyacrylate acrylic rubber, some flouroelastomers and nitrile butadiene rubber.

Gasket members for engines and other products, such as oil pans and valve covers, have a certain durability and life span. The expected life span can be altered by a number of factors, such as heat and toxic fluids. In any event, it is known that gaskets for vehicle components often wear out and need replacing. The present invention is designed to manufacture and produce gaskets that can replace the original equipment gaskets and perform as well or better than the original equipment gaskets - and do so in a faster and more accurate manner.

One known method of producing replacement gaskets is to attempt to measure and draw the actual groove in the actual component. Not only is this time consuming and expensive, but it also can be significantly inaccurate. Similarly, trying to accurately measure the original gasket after it has been removed from the component is time-consuming and typically inaccurate. On many occasions, using either of these known processes, the final gaskets will not fit properly. This can result in the tooling being reworked or scrapped, causing wasteful expense.

A representative engine component 10 is shown in Figure 1. In this example, the component is an oil pan cover. The cover 10 is made of a metal material, such as aluminum or steel, and has a groove 12 formed in a surface 14 which mates with another oil pan component.

The gasket 20 which is pressed into the groove during manufacturing, is shown in Figure 1 and positioned above the groove 12. In use, the gasket 20 is pressed into the groove manually or by a conventional manufacturing procedure.

In the inventive process and system herein for making replacement gaskets, the original gasket is first removed from the component. Typically it is worn, torn, or not in its original shape. The groove 12 is then cleaned in order to remove any debris or residue. This can be done mechanically or manually, as desired.

It is also possible to obtain a new factory-made product or component and use that for producing the replacement gasket, although this creates an unnecessary expense. With new products, the grooves also will need to be cleared and thoroughly cleaned.

The groove 12 is then prepared by spraying or otherwise applying a release agent into it. This allows for ease of removal of the sample gasket after it has hardened. A preferred release agent which can be used for this purpose is spray silicone although there are other known release agents which could be used for this same purpose.

Once the groove 12 is cleaned and prepared with a release agent, a curable material 22 is placed into the groove 12. This step is shown in Figure 2. The material preferably is a mixable 2-part liquid plastic material, such as "Smooth on Epoxy Resin", but it can be any material which performs the same function and achieves the same result. The molding material could also be clay, or an epoxy resin.

The material is mixed (if required), poured or dispensed into the groove 12, and then allowed to cure or harden. The material can be cured in any conventional way, over a certain time period, with added heat, with ultraviolet light, or the like, as required for the material utilized.

The procedure by which the material 22 is positioned in the groove 12 also is not critical. The material could simply be manually poured into the groove from a cup or dish of some type, or by use of a mechanical dispenser device, such as the device 24 shown in Figure 2. For manual dispensing, a cooking baster, a caulking tube application device, or a hydraulic syringe needle could be utilized. It is preferred that the filling of the groove be carried out in a slow and steady manner. This provides a more uniform fill of the groove.

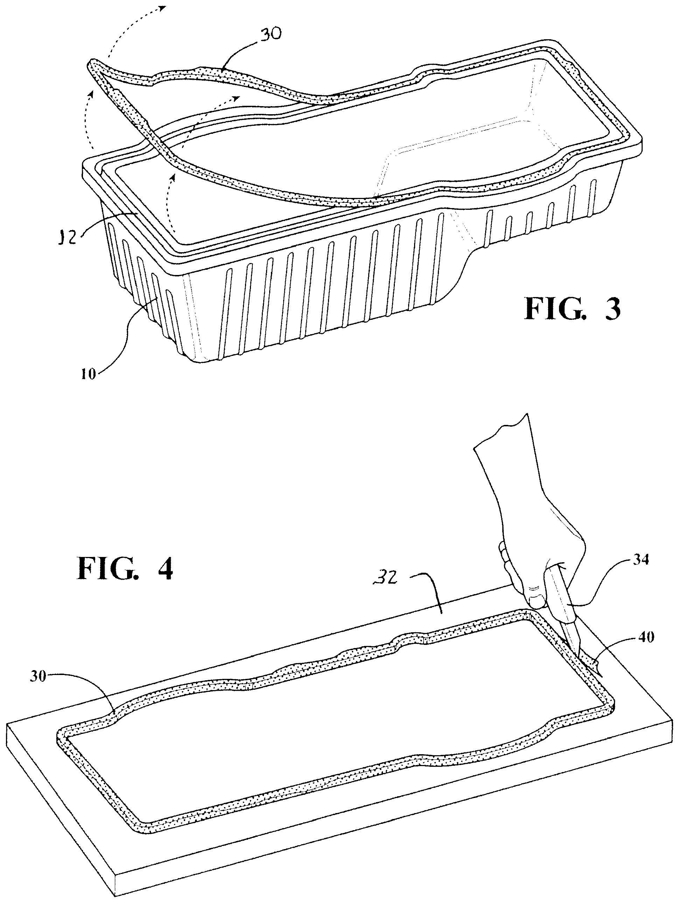

Once the material has cured and hardened in the groove, it is removed. This is shown in Figure 3. The cured rigid sample gasket 30 is removed carefully from the groove 12, preferably manually in order to prevent damage to it.

The sample gasket member 30 is then inspected to make sure that it is a useable product. Any external material, such as flashing or other irregularities, are removed. One manner in which this can be accomplished is shown in Figure 4. The sample gasket 30 is positioned on a flat table or surface 32 and a knife 34 or other implement is used to trim off the unnecessary items, such as flash 40. The edges and surfaces of the sample gasket 30 can also be smoothed, such as by rubbing or light sanding.

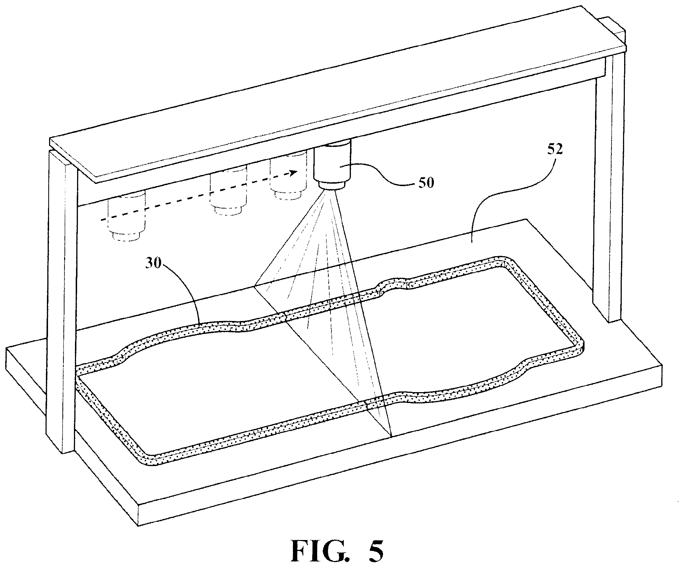

Once the sample gasket is trimmed and finished, its shape and dimensions are recorded. This preferably is done with a laser scanner 50 as shown in Figure 5. The gasket 30 is positioned on an appropriate surface, such as table 52, and the laser scanner is programmed to move over the sample gasket 30 and record its size, shape and pertinent dimensions. A 2-D or 3-D image can be made of the sample gasket.

Applicable 2-D scanners include Fabrivision scanners and table top scanners. 3D scanners include Steinbichler, Solution NIX, Creaform, ComScan, Capture 3D and 2-Corp. A preferred software used to operate a scanner for this purpose is Rapidform.

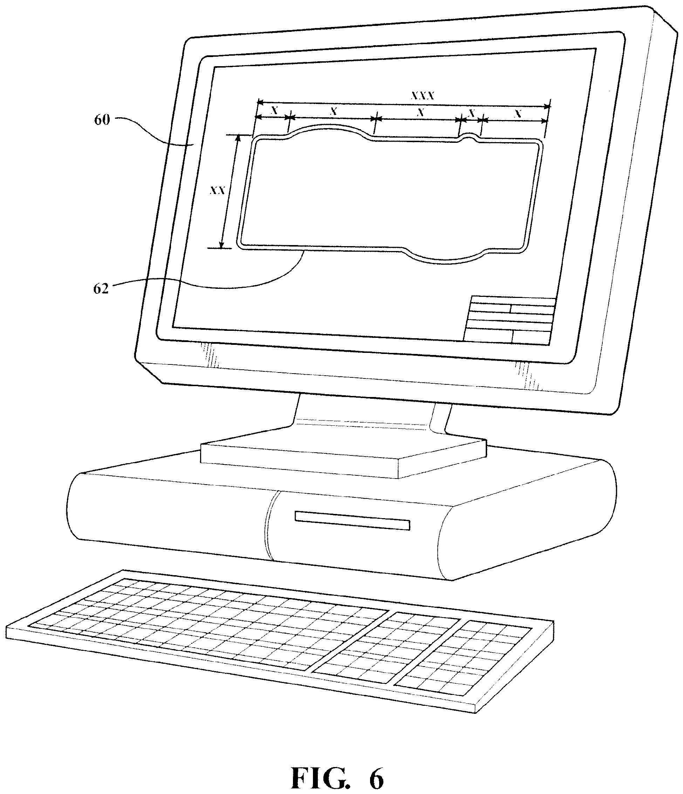

Based on the measured sample, drawings are made of the final gasket. These can be part and/or production drawings. A representative drawing 60 is shown in Figure 6. The sample gasket is depicted as figure 62 on the drawing 60.

Once the production drawings of the gasket are made, molds and tooling (not shown) are made in a conventional manner. The replacement gaskets are then produced by use of the tooling.

Figure 7 is a flow chart of a representative embodiment of the invention. After an actual grooved component is secured and the groove is cleaned and prepared 70, an appropriate release agent is applied in the groove 72. The curable material is then dispensed into the groove cavity 74 and the material is cured (hardened) 76. Once the sample gasket is cured, it is removed from the groove 78 and trimmed as necessary 80.

The final sample gasket is then measured and scanned 82, such as with a laser scanner. One or more drawings are then prepared 84 from the measurements and data made and supplied by the scanner.

Molds (tooling) can be prepared from the drawings and production gaskets can be produced for marketing.

Although the invention has been described with respect to preferred embodiments, it is to be also understood that it is not to be so limited since changes and modifications can be made therein which are within the full scope of this invention as detailed by the following claims.

## Claims

1. A process for producing a gasket member, said process comprising the steps of:
(a) filling a groove cavity (12) in a product (10) to be sealed with a liquid curable molding material (22);
(b) allowing said material to cure to form a hardened_sample gasket member (30);
(c) removing the cured and hardened sample gasket member from the groove cavity;
(d) measuring the size and shape of the removed sample gasket member; and
wherein the process further comprises making tooling for production of other gasket members, said tooling based on the measurements made in step (d).

2. The process as described in claim 1 further comprising the step of removing a used gasket from the groove cavity and preparing and cleaning the groove cavity prior to step (a).

3. The process as described in claim 1 further comprising curing the liquid curable molding material with heat, time or light.

4. The process as described in claim 1 further comprising the step of applying a release agent in the groove cavity prior to step (a).

5. The process as described in claim 1 wherein step (c) comprises manually removing the cured gasket member.

6. The process as described in claim 1 wherein step (d) comprises scanning the gasket member with a laser scanner (50).

7. The process as described in claim 6 further comprising securing electronic data relative to the precise size and shape of the gasket member.

8. The process as described in claim 1 further comprising:
(e) making drawings (60) of the sample gasket member based on the measurements made in step (d).

## Patentansprüche

1. Prozess zum Herstellen eines Dichtungselementes, wobei der Prozess die folgenden Schritte umfasst:
(a) Füllen eines Nuthohlraums (12) in einem Produkt (10), das abgedichtet werden soll, mit einem flüssigen vernetzbaren Formmaterial (22);
(b) dem Material ermöglichen zu vernetzen, um ein gehärtetes Musterdichtungselement (30) zu bilden;
(c) Entfernen des vernetzten und gehärteten Musterdichtungselementes aus dem Nuthohlraum;
(d) Messen der Größe und Form des entfernten Musterdichtungselementes; und wobei der Prozess ferner das Herstellen von Werkzeugausrüstung für die Produktion von anderen Dichtungselementen umfasst, wobei die Werkzeugausrüstung auf den Messungen beruht, die in Schritt (d) ausgeführt wurden.

2. Prozess, wie in Anspruch 1 beschrieben, der ferner den Schritt des Entfernens der Dichtung aus dem Nuthohlraum und des Vorbereitens und Reinigens des Nuthohlraums vor Schritt (a) umfasst.

3. Prozess, wie in Anspruch 1 beschrieben, der ferner das Vernetzen des flüssigen vernetzbaren Formmaterials mit Wärme, Zeit oder Licht umfasst.

4. Prozess, wie in Anspruch 1 beschrieben, der ferner den Schritt des Anwendens eines Trennmittels im Nuthohlraum vor Schritt (a) umfasst.

5. Prozess, wie in Anspruch 1 beschrieben, wobei Schritt (c) das manuelle Entfernen des vernetzten Dichtungselementes umfasst.

6. Prozess, wie in Anspruch 1 beschrieben, wobei Schritt (d) das Scannen des Dichtungselementes mit einem Laserscanner (50) umfasst.

7. Prozess, wie in Anspruch 6 beschrieben, der ferner das Sichern von elektronischen Daten in Bezug auf die genaue Größe und Form des Dichtungselementes umfasst.

8. Prozess, wie in Anspruch 1 beschrieben, ferner umfassend:
(e) Erstellen von Zeichnungen (60) des Musterdichtungselementes auf der Basis der Messungen, die in Schritt (d) ausgeführt wurden.

## Revendications

1. Processus de fabrication de joints à pression, ledit processus comprenant les étapes consistant à :
(a) remplir une cavité de rainure ⁽¹²⁾ dans un produit ⁽¹⁰⁾ qui doit être scellé avec un matériel de moulage durcissable liquide (22) ;
(b) permettre audit matériau de durcir pour former un élément de joint d'échantillon durci (30) ;
(c) éliminer l'élément de joint d'échantillon durci et trempé à partir de la cavité de rainure ;
(d) mesurer la taille et la forme de l'élément de joint d'échantillon éliminé ; et dans lequel le processus consiste en outre à fabriquer de l'outillage pour la production d'autres éléments de joint, ledit outillage étant basé sur les mesures effectuées lors de l'étape (d).

2. Processus tel que décrit selon la revendication 1 comprenant en outre l'étape consistant à éliminer un joint utilisé depuis la cavité de rainure et à préparer et à nettoyer la cavité de rainure avant l'étape (a).

3. Processus tel que décrit selon la revendication 1 consistant en outre à durcir le matériau de moulage durcissable liquide avec de la chaleur, du temps ou de la lumière.

4. Processus tel que décrit selon la revendication 1 comprenant en outre l'étape consistant à appliquer un agent de libération dans la cavité de rainure avant l'étape (a).

5. Processus tel que décrit selon la revendication 1 dans lequel l'étape (c) consiste à éliminer manuellement l'élément de joint durci.

6. Processus tel que décrit selon la revendication 1 dans lequel l'étape (d) consiste à scanner l'élément de joint avec un scanner laser ⁽⁵⁰⁾.

7. Processus tel que décrit selon la revendication 6 consistant en outre à sécuriser des données électroniques liées à la taille et à la forme précises de l'élément de joint.

8. Processus tel que décrit selon la revendication 1 consistant en outre à :
(e) faire des dessins ⁽⁶⁰⁾ de l'élément de joint d'échantillon sur la base des mesures effectuées lors de l'étape (d).
